# EUROPEAN PATENT SPECIFICATION

(11) **EP 4 108 901 B1**
(45) Date of publication and mention of the grant of the patent: **10.04.2024**
(21) Application number: 20919815.9
(22) Date of filing: 20.02.2020
(51) Int. Cl.: F02D 41/06, F02D 41/14, G01N 27/406

(54) **HEATER CONTROL DEVICE FOR AIR/FUEL RATIO SENSOR AND HEATER CONTROL METHOD FOR AIR/FUEL RATIO SENSOR**
HEIZUNGSREGLERVORRICHTUNG FÜR EINEN LUFTKRAFTSTOFFVERHÄLTNISSENSOR UND HEIZUNGSREGLERSTEUERUNGSVERFAHREN FÜR EINEN SENSOR ZUR STEUERUNG DES LUFTKRAFTSTOFFVERHÄLTNISSENSORS
DISPOSITIF DE COMMANDE DE CHAUFFAGE POUR CAPTEUR DE RAPPORT AIR-CARBURANT ET PROCÉDÉ DE COMMANDE DE CHAUFFAGE POUR CAPTEUR DE RAPPORT AIR-CARBURANT

(43) Date of publication of application: 28.12.2022
(73) Proprietor: HONDA MOTOR CO., LTD., Minato-ku Tokyo 107-8556 (JP)
(72) Inventor: AOKI Erina, Tokyo 107-8556 (JP); TSUCHIYA Takashi, Tokyo 107-8556 (JP)
(74) Representative: Weickmann & Weickmann PartmbB
(86) International application number: PCT/JP2020/006944
(87) International publication number: WO 2021/166201

(56) References cited:
- EP-A1- 2 065 580
- DE-A1- 19 941 878
- DE-A1-102017 206 399
- DE-B3-102004 031 083
- JP-A- 2003 161 202
- JP-A- 2004 069 644

## Description

### Technical Field

The present invention relates to a heater control device for an air-fuel ratio sensor and a heater control method for an air-fuel ratio sensor, and more particularly to a heater control device for an air-fuel ratio sensor and a heater control method for an air-fuel ratio sensor capable of appropriately executing heating control while protecting the air-fuel ratio sensor.

### Background Art

Conventionally, in order to cause a sensor element activated at a predetermined temperature to function, an air-fuel ratio sensor in which a heater that generates heat by being energized is disposed around the sensor element is known.

JP 3524373 B discloses a configuration of a heater control device for an air-fuel ratio sensor in which a heating amount of a heater is gradually increased from an initial value to a maximum value according to the degree of activation of a sensor element at the time when an engine is started.

In EP 2 065 580 A, on which the preamble of claim 1 is based, the predetermined time is set shorter in a case of the normal mode restart than in case of the delay mode start.

### Summary of Invention

### Problem to be solved by Invention

Here, when the engine is stopped and air in an exhaust pipe cools, water droplets sometimes adhere to the air-fuel ratio sensor exposed in the exhaust pipe. When the influence on the air-fuel ratio sensor is considered, it is not preferable to start heating in a state in which the water droplets adhere. However, in JP 3524373 B, heating control considering the adhesion of the water droplets is not examined. And there has been known so-called idling stop control for automatically stopping an engine at the time of temporary stop and restarting the engine according to predetermined starting operation. However, in JP 3524373 B, heating control at the time of restart from the idling stop has not been examined either.

An object of the present invention is to solve the above-described problems of the prior art and to provide a heater control device for an air-fuel ratio sensor and a heater control method for an air-fuel ratio sensor capable of executing appropriate heating control at the time of restart from an idling stop.

### Solution to Problem

In order to achieve the above object, the present invention provides a heater control device and method according to claims 1 and 6. Preferred embodiments are defined in the dependent claims.

### Advantageous Effects of Invention

According to the features of claim 1, the heater control device for the air-fuel ratio sensor includes the air-fuel ratio sensor (80) attached to the exhaust pipe (19) of the engine (E), the heater (88) that heats the sensor element (87) of the air-fuel ratio sensor (80), and the control unit (100) that performs the heating control of the heater (88), wherein as the start modes of the engine (E), there are the two types the normal start (A) for starting the engine (E) according to the start operation of the driver and the restart (B) from the temporary stop by the idling stop control, the control unit (100) starts the constant temperature heating control with the elapse of the predetermined time (T1, T2, T3, T4) after the start of the engine (E) as the trigger, and the predetermined time (T1, T2, T3, T4) is set shorter in the restart (B) than in the normal start (A). Therefore, in the case of the normal start, although there is a possibility that water droplets adhere to the air-fuel ratio sensor, with providing a period in which the water droplets are blown off by a flow of a combustion gas, it is possible to prevent the air-fuel ratio sensor from being heated in a state in which the water droplets adhere and protect the air-fuel ratio sensor. In the case of the restart from the idling stop control, since a possibility that water droplets adhere to the air-fuel ratio sensor is low, it is possible to activate the air-fuel ratio sensor early and execute appropriate fuel injection control and ignition control.

Further, the constant temperature heating control is the constant temperature heating (Z) by the feedback control, and the control unit (100) executes, in order, the preheating (X) having the lower setting temperature than the constant temperature heating (Z) and the rapid heating (Y) having the higher setting temperature than the constant temperature heating (Z) from the start of the engine (E) to the start of the constant temperature heating (Z). Therefore, it is possible to prevent the air-fuel ratio sensor from being rapidly heated by the preheating and smoothly activate the air-fuel ratio sensor by the rapid heating.

According to the features of claim 2, the predetermined time (T1, T2, T3, T4) is set shorter as the cooling water temperature of the engine (E) is higher. Therefore, when the cooling water temperature is high and the possibility that water droplets adhere to the air-fuel ratio sensor is low, it is possible to activate the air-fuel ratio sensor early and execute appropriate fuel injection control and ignition control.

According to the features of claim 3, the predetermined time (T1, T2, T3, T4) is set shorter as the throttle opening degree is larger. Therefore, when the throttle opening degree is large and the flow of the combustion gas is fast, since the water droplets of the air-fuel ratio sensor is blown away early, it is possible to activate the air-fuel ratio sensor early and execute appropriate fuel injection control and ignition control.

According to the features of claim 4, in the case of the restart (B), the control unit (100) sets the predetermined time (T1, T2) short by setting the time until the preheating (X) is started shorter than in the case of the normal start (A). Therefore, it is possible to change the time until the constant temperature heating is started without changing execution times of the preheating and the rapid heating.

According to the features of claim 5, in the case of the restart (B), the control unit (100) sets the predetermined time (T3, T4) short by setting the execution time of the preheating (X) shorter than in the case of the normal start (A). Therefore, it is possible to change the time until the constant temperature heating is started by setting the execution time of the preheating short and arithmetic processing is facilitated.

According to the features of claim 6, the heater control method for the air-fuel ratio sensor applied to the heater control device includes the air-fuel ratio sensor (80) attached to the exhaust pipe (19) of the engine (E), the heater (88) that heats the sensor element (87) of the air-fuel ratio sensor (80), and the control unit (100) that performs the heating control of the heater (88), wherein as the start modes of the engine (E), there are the two types of the normal start (A) for starting the engine (E) according to the start operation of the driver and the restart (B) from the temporary stop by the idling stop control, the control unit (100) starts the constant temperature heating control with the elapse of the predetermined time (T1, T2, T3, T4) after the start of the engine (E) as the trigger, and the predetermined time (T1, T2, T3, T4) is set shorter in the case of the restart (B) than in the case of the normal start (A). Therefore, in the case of the normal start, although there is a possibility that water droplets adhere to the air-fuel ratio sensor, with providing a period in which the water droplets are blown off by a flow of a combustion gas, it is possible to prevent the air-fuel ratio sensor from being heated in a state in which the water droplets adhere and protect the air-fuel ratio sensor. In the case of the restart from the idling stop control, since a possibility that water droplets adhere to the air-fuel ratio sensor is low, it is possible to activate the air-fuel ratio sensor early and execute appropriate fuel injection control and ignition control.

Further, the constant temperature heating control is the constant temperature heating (Z) by the feedback control, and the control unit (100) executes, in order, the preheating (X) having the lower setting temperature than the constant temperature heating (Z) and the rapid heating (Y) having the higher setting temperature than the constant temperature heating (Z) from the start of the engine (E) to the start of the constant temperature heating (Z). Therefore, it is possible to prevent the air-fuel ratio sensor from being rapidly heated by the preheating and smoothly activate the air-fuel ratio sensor by the rapid heating.

### Brief Description of Drawings

Fig. 1 is a left side view of a motorcycle functioning as a saddle-type vehicle according to an embodiment of the present invention.
Fig. 2 is a cross-sectional view of an enlarged diameter portion provided halfway in an exhaust pipe.
Fig. 3 is a side view of an air-fuel ratio sensor.
Fig. 4 is a block diagram illustrating an overall configuration of a heater control device according to the embodiment.
Fig. 5 is a flowchart illustrating a procedure of heater control according to the embodiment.
Fig. 6 is a time chart illustrating a flow of the heater control according to the embodiment.
Fig. 7 is a flowchart illustrating a procedure of heater control according to a second embodiment.
Fig. 8 is a time chart illustrating a flow of the heater control according to the second embodiment.

### Description of Embodiments

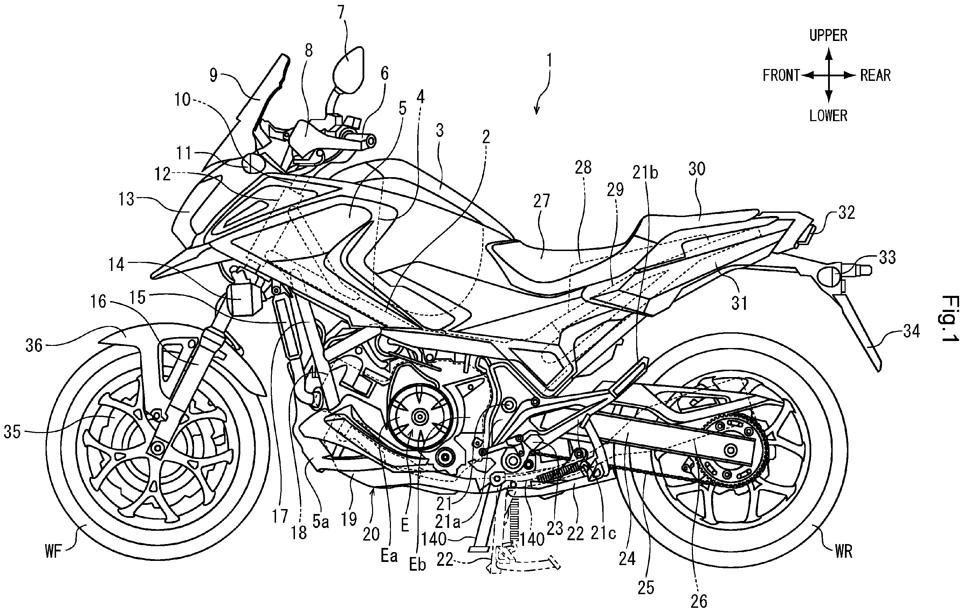

Hereinafter, preferred embodiments of the present invention are explained in detail below with reference to the drawings. Fig. 1 is a left side view of a motorcycle 1 functioning as a saddle-type vehicle according to an embodiment of the present invention. Ahead pipe 12 pivotally supporting a steering stem 10 so as to be rotatable is attached to the front end of a vehicle body frame 2 of the motorcycle 1, which is the saddle-type vehicle. A steering handle 6 is attached to the upper end of the steering stem 10 via a not-illustrated top bridge. The top bridge turning integrally with the steering stem 10 supports a pair of left and right front forks 16 together with a not-illustrated bottom bridge fixed to the steering stem 10 in a lower portion of the head pipe 12. A front wheel WF including a brake disc 35 is pivotally supported at the lower ends of the front forks 16 so as to be rotatable.

A parallel two-cylinder engine E in which a lower portion of the cylinder head 18 is supported by a hanger frame 17 extending downward from the rear of the head pipe 12 is disposed in a lower portion of the vehicle body frame 2. A generator cover Ea and a drive sprocket cover Eb are attached to a left side of the engine E in a vehicle width direction. A radiator 15 for engine cooling water is disposed in the front of the hanger frame 17.

The vehicle body frame 2 supports the engine E in an upper portion and a rear portion of the engine E and pivotally supports a swing arm 24 with a pivot 21 so as to be swingable. Below a pivot plate 21a pivotally supporting the pivot 21, a pair of left and right footrest steps 23 for a driver is provided. A foldable step 21b for a passenger is disposed in a step bracket 21c above the rear of the footrest steps 23. A main stand 22 for floating and self-supporting a rear wheel WR of the motorcycle 1 when the motorcycle 1 is stopped and a side stand 140 for inclining a vehicle body to the left side and self-supporting the vehicle body are attached below the footrest steps 23. The main stand 22 and the side stand 140 are swung to a vehicle body rear side by approximately 90 degrees to be in a stored state.

An exhaust device 20 that purifies and silences an exhaust gas of the engine E and discharges the exhaust gas rearward is attached to a vehicle body lower portion of the motorcycle 1. The exhaust device 20 includes an exhaust pipe 19 that is connected to an exhaust port of a cylinder and guides an exhaust gas rearward and a muffler 26 that is connected to the rear end of the exhaust pipe 19. An exhaust pipe cover 5a covering the front and the sides of the exhaust pipe 19 is disposed below the front of the cylinder head 18. The swing arm 24 pivotally supported by the pivot 21 is suspended from the vehicle body frame 2 by a not-illustrated rear cushion. A driving force of the engine E is transmitted to, via a drive chain 25, the rear wheel WR pivotally supported at the rear end portion of the swing arm 24 so as to be rotatable.

A storage box 4 accessed from a large opening and closing lid 3 is provided above the engine E and in a position covered with a side cowl 5 which is an exterior component. A headlight 13 is disposed in the front of the side cowl 5. A pair of left and right flasher lamps 11 and a windscreen 9 are disposed above the headlight 13. A knuckle guard 8 and a rearview mirror 7 are respectively attached to left and right steering handles 6. A pair of left and right fog lamps 14 is attached below the side cowl 5 and in a position on the outer side of the front fork 16 in the vehicle width direction. A front fender 36 for preventing mud splashes, etc. to the vehicle body is attached above the front wheel WF.

A rear frame 29 that supports a fuel tank 28, etc. is attached behind the vehicle body frame 2. The left and the right of the rear frame 29 are covered with a seat cowl 31. A driver seat 27 and a passenger seat 30 are disposed above the seat cowl 31. A tail lamp device 32 is attached to the rear end of the seat cowl 31. A flasher lamp 33 on the rear side is supported by a rear fender 34 extending rearward and downward from the seat cowl 31.

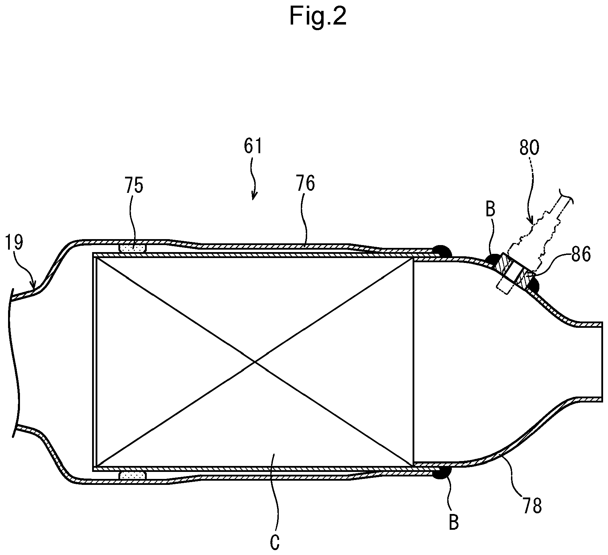

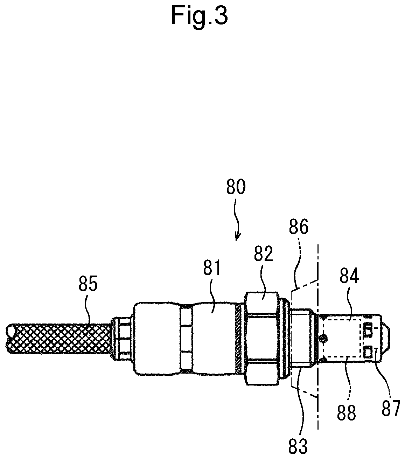

Fig. 2 is a cross-sectional view of an enlarged diameter portion 61 provided halfway in the exhaust pipe 19. Fig. 3 is a front view of the air-fuel ratio sensor 80. A catalyst device C is housed in the enlarged diameter portion 61. An air-fuel ratio sensor 80 is disposed behind the catalyst device C. The enlarged diameter portion 61 is configured by holding the catalyst device C on the inner side of a front outer cylinder 76 via a gasket 75 and welding and fixing the rear end portions of the catalyst device C and the front outer cylinder 76 to the outer peripheral surface of a funnel-like rear outer cylinder 78 with a weld bead B. The air-fuel ratio sensor 80 is held by being screwed to a pedestal 86 functioning as an attachment boss welded and fixed to the rear outer cylinder 78.

Referring to Fig. 3, the air-fuel ratio sensor 80 can be an LAF sensor capable of linearly detecting a change in oxygen concentration or an O2 sensor capable of detecting only whether an air-fuel ratio is higher or lower than the stoichiometric air-fuel ratio by inverting an output value with the stoichiometric air-fuel ratio as a boundary. The air-fuel ratio sensor 80 is equipped with a heater controlled by a control unit. A sensor unit 84 incorporating a ceramic heater 88 for heating a sensor element 87 is attached to project to the inner side of the rear outer cylinder 78 by screwing a screw portion 83 to the pedestal 86 and tightening a nut portion 82 integrated with a main body portion 81. A wire 85 for outputting a sensor signal is connected to the end portion of the main body portion 81.

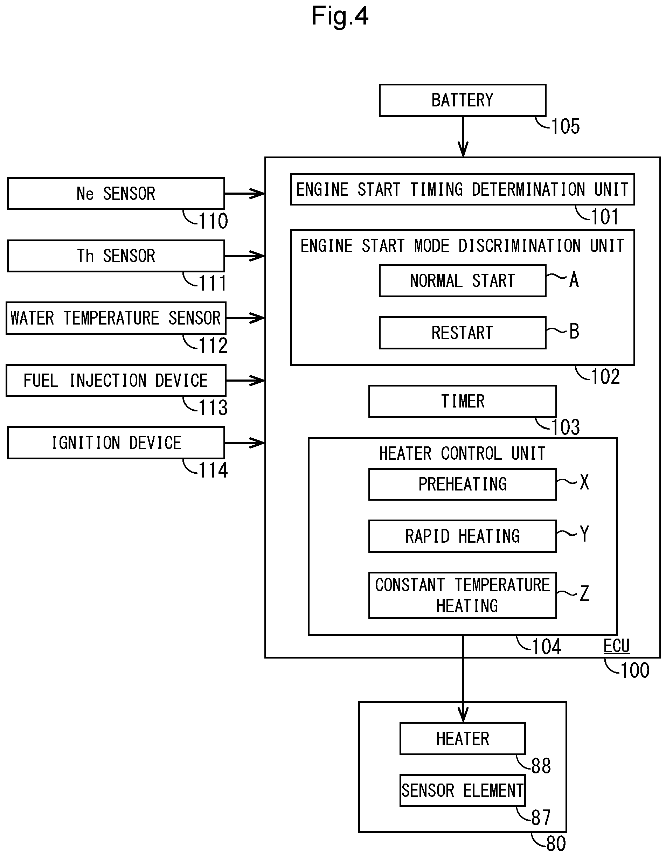

Fig. 4 is a block diagram illustrating an overall configuration of a heater control device according to the present embodiment. Sensor signals from an Ne sensor 110 that detects engine speed, a Th sensor 111 that detects a throttle opening degree, and a water temperature sensor 112 that detects a cooling water temperature of an engine are input to an ECU 100 functioning as a control unit. The ECU 100 controls a fuel injection device 113 and an ignition device 114 and, on the other hand, receives driving signals of the fuel injection device 113 and the ignition device 114. The ECU 100 is driven by electric power supplied from a battery 105 and supplies the electric power of the battery 105 to the heater 88 to perform heating control.

The ECU 100 includes an engine start timing determination unit 101, an engine start mode discrimination unit 102, a timer 103, and a heater control unit 104.

The ECU 100 automatically stops the engine at the time of a temporary stop such as waiting for a traffic light and executes idle stop control for restarting the engine according to start operation. For example, the ECU 100 can be configured to automatically stop the engine when vehicle speed is a predetermined value or less and throttle opening degree is below the predetermined, and to restart the engine when the driver opens a throttle grip. The idling stop control is executed only when the cooling water temperature of the engine is equal to or higher than a predetermined value.

When the engine E is started, the engine start mode discrimination unit 102 discriminates, as "normal start A", a first start started by operating an ignition switch and a starter switch and discriminates as "restart B", a start from the temporary stop state by the idle stop control.

In both of the normal start A and the restart B, the engine start timing determination unit 101 detects timing when the ignition device 114 ignites fuel and the engine E is actually started, and starts the timer 103.

The heater control unit 104 heats the heater 88 of the air-fuel ratio sensor 80 by switching, predetermined order and timing, three modes of preheating X having a relatively weak heater output, rapid heating Y having a relatively high heater output, and constant temperature heating Z for performing feedback control at a temperature between the preheating X and the rapid heating Y In the present embodiment, the preheating X is started when a predetermined time elapses from the start of the engine E and, thereafter, heating control is executed in the order of the preheating X → the rapid heating Y → the constant temperature heating Z. This embodiment has a characteristic in that a time from the start of the engine E to the start of the preheating X is differentiated between the case of the normal start A and the case of the restart B. Specifically, this embodiment is configured to set the time until the preheating X is started short in the case of the restart B compared with the case of the normal start A.

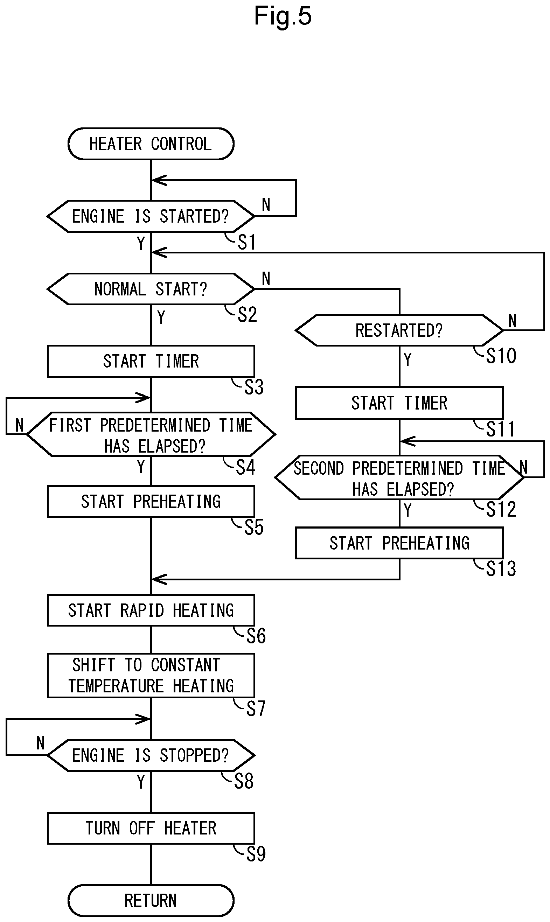

Fig. 5 is a flowchart illustrating a procedure of heater control according to the present embodiment. In step S1, it is determined whether the engine E is started. When an affirmative determination is made in step S1, the procedure proceeds to step S2 and it is determined whether the start is normal start A. When an affirmative determination is made in step S2, that is, when it is determined that the start is the normal start A, the procedure proceeds to step S3 and the timer 103 is started. When a negative determination is made in step S1, the procedure returns to the determination in step S1.

In step S4, it is determined whether a first predetermined time applied in the case of the normal start A has elapsed. When an affirmative determination is made in step S4, the procedure proceeds to step S5 and the preheating X is started. In subsequent step S6, the rapid heating Y is started. Note that, when a negative determination is made in step S4, the procedure returns to the determination in step S4.

On the other hand, when a negative determination is made in step S2, the procedure proceeds to step S10 and it is determined whether the start is the restart B from the temporary stop by the idle stop control. When an affirmative determination is made in step S10, the procedure proceeds to step S11 and the timer 103 is started. When a negative determination is made in step S10, the procedure returns to the determination in step S2.

In step S12, it is determined whether a second predetermined time applied in the case of the restart B has elapsed. When an affirmative determination is made in step S12, the procedure proceeds to step S13 and the preheating X is started. In subsequent step S6, the rapid heating Y is started. Note that, when a negative determination is made in step S12, the procedure returns to the determination in step S12.

Then, in step S7, a shift to the constant temperature heating Z is performed. In subsequent step S8, it is determined whether the engine E has stopped. When an affirmative determination is made, the heater is turned off in step S9 and a series of control is ended. Note that, when a negative determination is made in step S8, the procedure returns to the determination in step S8.

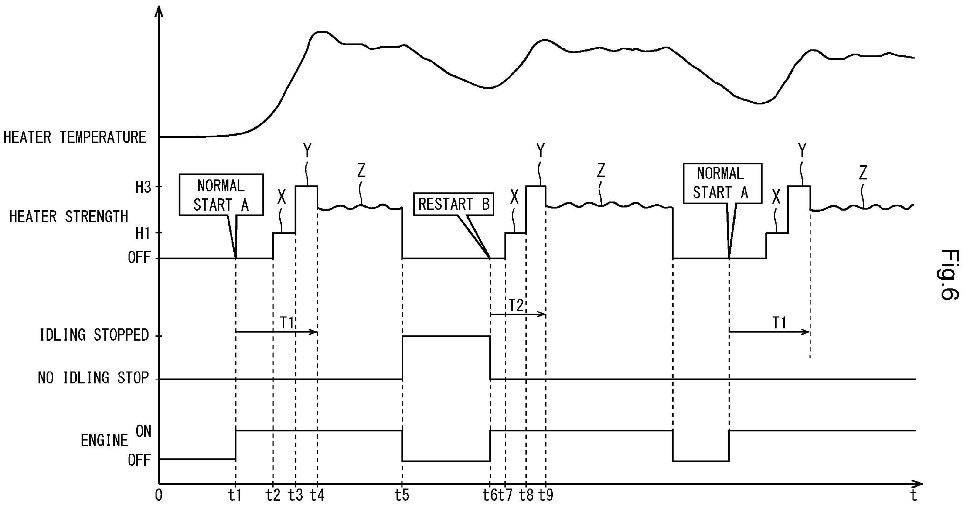

Fig. 6 is a time chart illustrating a flow of heater control according to the present embodiment. At time t = 0, the time is before the start of the engine E and the heater control is not performed. When the engine E is started at time t1, the control unit 100 starts the timer 103.

Here, when the engine E is stopped and the air in the exhaust pipe cools, water droplets sometimes adhere to a sensor portion of the air-fuel ratio sensor 80 exposed in the exhaust pipe. Accordingly, in the case of the normal start A, that is, in the case of the start by the operation of the starter switch, the heater-off state is maintained during a from time t1 to time t2 in order to secure a time for blowing off moisture adhering to the air-fuel ratio sensor 80 with a flow of a combustion gas. Consequently, it is possible to prevent rapid heating in a state in which the water droplets adhere to the air-fuel ratio sensor 80.

The preheating X with heater strength H1 is started at time t2 and the rapid heating Y with heater strength H3 is started at time t3. The preheating X and the rapid heating Y are respectively set to predetermined times. At time t4, the procedure shifts to the constant temperature heating Z by the feedback control.

On the other hand, in the case of the restart B from the temporary stop state by the idle stop control, since the engine E is sufficiently warmed and a possibility that moisture adheres to the air-fuel ratio sensor 80 is low, considering that the heating control can be executed at early timing, the procedure is set to shift to the preheating X at time t7 when a predetermined time has elapsed from time t6.

Specifically, at time t5, the engine E is turned off by idling stop. At the following time t6, the engine E is restarted and the control unit 100 starts the timer 103. In the present embodiment, a time from the start of the engine E to the start of the preheating X is changed between the case of the normal start A and the case of the restart B. Whereas, in the case of the normal start A, for example, the time is five seconds in time t1 to t2, in the case of the restart B, for example, the time is two seconds shorter than 5 seconds. Consequently, a predetermined time T from the start of the engine E to the start of the constant temperature heating Z is reduced from T1 to T2.

The preheating X is started at time t7 and the rapid heating Y is started at time t8. The preheating X and the rapid heating Y are respectively set to predetermined times. At time t9, the procedure shifts to the constant temperature heating Z by the feedback control. In the present embodiment, since the time from the start of the engine E to the start of the preheating X is set shorter compared with the case of the normal start A, feedback control based on an output signal of the air-fuel ratio sensor 80 can be started at early timing.

Note that the predetermined times T1 and T2 can be set shorter as the cooling water temperature of the engine E is higher. Consequently, when the cooling water temperature is high and a possibility that water droplets adhere to the air-fuel ratio sensor is low, it is possible to activate the air-fuel ratio sensor early and execute appropriate fuel injection control and ignition control.

The predetermined times T1 and T2 can be set shorter as the throttle opening degree is larger. Consequently, when the throttle opening degree is large and the flow of the combustion gas is fast, the water droplets adhering to the air-fuel ratio sensor 80 is blown away early. Therefore, it is possible to activate the air-fuel ratio sensor 80 early and execute appropriate fuel injection control and ignition control.

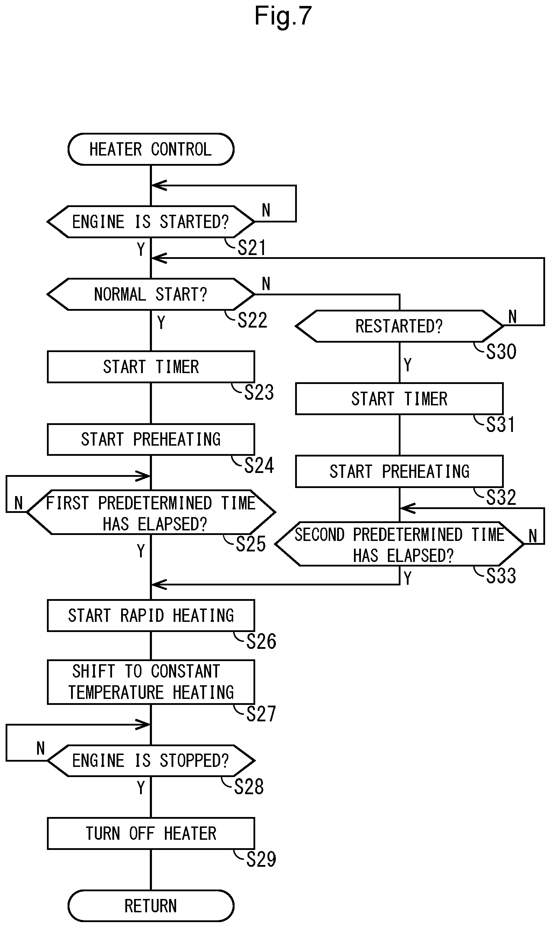

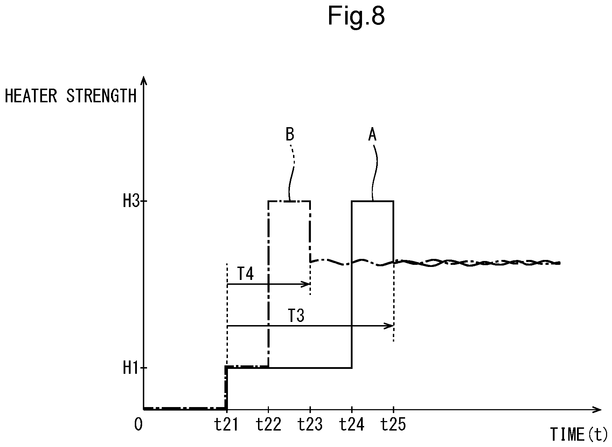

Fig. 7 is a flowchart illustrating a procedure of heater control according to a second embodiment. Fig. 8 is a time chart illustrating a flow of the heater control according to the second embodiment. In the second embodiment, preheating is started according to a start of the engine E and heating control is executed in the order of the preheating X → the rapid heating Y → the constant temperature heating Z. The second embodiment has a characteristic in that a time from a start of the preheating X to a start of the rapid heating Y involved in the start of the engine E differs between the case of the normal start A and the case of the restart B. More specifically, in the case of the restart B, an execution time of the preheating X is shorter compared with in the case of the normal start A.

Referring to the flowchart of Fig. 7, in step S21, it is determined whether the engine E has been started. When an affirmative determination is made in step S21, the procedure proceeds to step S22 and it is determined whether the start is the normal start A. When an affirmative determination is made in step S22, that is, when it is determined that the start is the normal start A, the procedure proceeds to step S23 and the timer 103 is started. When a negative determination is made in step S21, the procedure returns to the determination in step S21.

In step S24, the preheating X is started. In subsequent step S25, it is determined whether a first predetermined time applied in the case of the normal start A has elapsed. When an affirmative determination is made in step S25, the procedure proceeds to step S26 and the rapid heating Y is started. Note that, when a negative determination is made in step S25, the procedure returns to the determination in step S25.

On the other hand, when a negative determination is made in step S22, the procedure proceeds to step S30 and it is determined whether the start is the restart B from the temporary stop by the idle stop control. When an affirmative determination is made in step S30, the procedure proceeds to step S31 and the timer 103 is started. When a negative determination is made in step S30, the procedure returns to the determination in step S22.

In step S32, the preheating X is started. In subsequent step S33, it is determined whether a second predetermined time applied in the case of the restart B has elapsed. When an affirmative determination is made in step S33, the procedure proceeds to step S26 and the rapid heating Y is started. Note that, when a negative determination is made in step S33, the procedure returns to the determination in step S33.

Then, in step S27, a shift to the constant temperature heating Z is performed. In subsequent step S28, it is determined whether the engine E has stopped. When an affirmative determination is made, the heater is turned off in step S29 and a series of control is ended. Note that, when a negative determination is made in step S28, the procedure returns to the determination in step S28.

Referring to the time chart of Fig. 8, at time t = 0, the time is before the start of the engine E and the heater control is not performed. When the engine E is started at time t21, the control unit 100 starts preheating X with the heater strength set to H1. Here, when the engine E is stopped and the air in the exhaust pipe cools, water droplets sometimes adhere to a sensor portion of the air-fuel ratio sensor 80 exposed in the exhaust pipe. Accordingly, in the case of the normal start A, that is, in the case of a first start started by operating an ignition switch and a starter switch, the preheating X having the heater strength H1 is maintained until time t24 when a predetermined time elapses from time t21 in order to secure a time for blowing off moisture adhering to the air-fuel ratio sensor 80 with a flow of a combustion gas. Consequently, it is possible to prevent rapid heating in a state in which the water droplets adhere to the air-fuel ratio sensor 80.

At time t24, the control unit 100 switches the preheating X to the rapid heating Y with the heater strength set to H3. At time t25, the control unit 100 shifts to constant temperature heating Z. In the constant temperature heating Z, feedback control is performed such that temperature is within a temperature range in which the sensor element 87 of the air-fuel ratio sensor 80 can be activated. Temperature measurement of the sensor element 87 is performed by observing a resistance value of the sensor element 87 that decreases according to a temperature rise.

On the other hand, in the case of the restart B from the temporary stop state by the idle stop control, since the engine E is sufficiently warmed and a possibility that moisture adheres to the air-fuel ratio sensor 80 is low, considering that the heating control can be executed at early timing, the procedure is set to end the preheating X at time t22 when a predetermined time elapses from time t21 and shift to the rapid heating Y Consequently, it is possible to start the feedback control based on an output signal of the air-fuel ratio sensor 80 at early timing. In the present embodiment, a time from the start of the engine E and the start of the preheating X to the end of the preheating X is changed between the case of the normal start A and the case of the restart B. Whereas, in the case of the normal start A, the time is, for example, five seconds from time t21 to time t24, in the case of the restart B, the time is, for example, two seconds which is less than five seconds. Consequently, the predetermined time T from the start of the engine E to the start of the constant temperature heating Z is reduced from T3 to T4.

Note that the predetermined times T3 and T4 can be set shorter as the cooling water temperature of the engine E is higher. Consequently, when the cooling water temperature is high and a possibility that water droplets adhere to the air-fuel ratio sensor is low, it is possible to activate the air-fuel ratio sensor early and execute appropriate fuel injection control and ignition control.

The predetermined times T3 and T4 can be set shorter as the throttle opening degree is larger. Consequently, when the throttle opening degree is large and the flow of the combustion gas is fast, the water droplets adhering to the air-fuel ratio sensor 80 is blown away early. Therefore, it is possible to activate the air-fuel ratio sensor 80 early and execute appropriate fuel injection control and ignition control.

As explained above, according to the heater control device according to the present invention, the ECU 100 starts the heating control with the elapse of the predetermined time after the start of the engine E as the trigger and the predetermined time is set shorter in the case of the restart B than in the case of the normal start A. Therefore, in the case of the normal start A, there is a possibility that water droplets adhere to the air-fuel ratio sensor 80, but by providing a period during which the water droplets are blown off by the flow of the combustion gas, it is possible to prevent the air-fuel ratio sensor from being heated in a state where the water droplets adhere and protect the air-fuel ratio sensor 80. And in the case of the restart B from the idling stop control, since a possibility that water droplets adhere to the air-fuel ratio sensor 80 is low, it is possible to activate the air-fuel ratio sensor 80 early and execute appropriate fuel injection control and ignition control.

Since the ECU 100 executes the preheating X having a heater output weaker than that of the rapid heating Y from the start of the engine E to the start of the rapid heating Y, it is possible to prevent the sensor element 87 from being rapidly heated by the rapid heating Y and protect the sensor element 87, by performing the preheating at temperature that does not affect the sensor element even if the sensor element is heated in a state in which water droplets adhere.

Further, since the ECU 100 shifts to the constant temperature heating Z, which is the feedback control of the temperature between the rapid heating Y and the preheating X, after the execution of the rapid heating Y, the air-fuel ratio sensor 80 is heated even by the heat of the combustion gas after being heated to an activation temperature in a short time by the rapid heating Y Therefore, it is possible to suppress a heating temperature and suppress power consumption.

Note that the form of the motorcycle, the shape and structure of the exhaust pipe, the shape and structure of the air-fuel ratio sensor, the strengths and the execution times of the preheating, rapid heating, and the constant temperature heating, and the like are not limited to the above embodiments and various changes are possible. The heater control device according to the present invention can be applied not only to the motorcycle but also to a saddle-type tricycle, four-wheeled vehicle, and the like.

### Reference Signs List

- 1: Motorcycle
- E: Engine
- 19: Exhaust pipe
- 80: Air-fuel ratio sensor
- 87: Sensor element
- 88: Heater
- 100: ECU (control unit)
- 101: Engine start timing determination unit
- 102: Engine start mode discrimination unit
- 103: Timer
- 104: Heater control unit
- A: Normal start
- B: Restart
- X: Preheating
- Y: Rapid heating
- Z: Constant temperature heating

## Claims

1. A heater control device for an air-fuel ratio sensor including: an air-fuel ratio sensor (80) attached to an exhaust pipe (19) of an engine (E); a heater (88) that heats a sensor element (87) of the air-fuel ratio sensor (80); and a control unit (100) that performs heating control for the heater (88), wherein
as start modes of the engine (E), there are two types of normal start (A) for starting the engine (E) according to start operation of a driver and restart (B) from a temporary stop by idling stop control, and
the control unit (100) starts constant temperature heating control with elapse of a predetermined time (T 1, T2, T3, T4) after the start of the engine (E) as a trigger, **characterized in that**
the predetermined time (T1, T2, T3, T4) is set shorter in a case of the restart (B) than in a case of the normal start (A),
wherein
the constant temperature heating control is constant temperature heating (Z) by feedback control, and
the control unit (100) executes, in order, preheating (X) having a lower setting temperature than the constant temperature heating (Z) and rapid heating (Y) having a higher setting temperature than the constant temperature heating (Z) from the start of the engine (E) to the start of the constant temperature heating (Z).

2. The heater control device for the air-fuel ratio sensor according to claim 1, wherein the predetermined time (T1, T2, T3, T4) is set shorter as cooling water temperature of the engine (E) is higher.

3. The heater control device for the air-fuel ratio sensor according to claim 1, wherein the predetermined time (T1, T2, T3, T4) is set shorter as a throttle opening degree is larger.

4. The heater control device for the air-fuel ratio sensor according to claim 1, wherein, in the case of the restart (B), the control unit (100) sets the predetermined time (T1, T2) short by setting a time until the preheating (X) is started, shorter than in the case of the normal start (A).

5. The heater control device for the air-fuel ratio sensor according to claim 1, wherein, in the case of the restart (B), the control unit (100) sets the predetermined time (T3, T4) short by setting an execution time of the preheating (X) shorter than in the case of the normal start (A).

6. A heater control method for an air-fuel ratio sensor applied to a heater control device including an air-fuel ratio sensor (80) attached to an exhaust pipe (19) of an engine (E), a heater (88) that heats a sensor element (87) of the air-fuel ratio sensor (80), and a control unit (100) that performs heating control of the heater (88), wherein
as start modes of the engine (E), there are two types of normal start (A) for starting the engine (E) according to start operation of a driver and restart (B) from a temporary stop by idling stop control,
the control unit (100) starts constant temperature heating control with elapse of a predetermined time (T 1, T2, T3, T4) after the start of the engine (E) as a trigger, **characterized in that**
the predetermined time (T1, T2, T3, T4) is shorter in a case of the restart (B) than in a case of the normal start (A),
wherein
the constant temperature heating control is constant temperature heating (Z) by feedback control, and
the control unit (100) executes, in order, preheating (X) having a lower setting temperature than the constant temperature heating (Z) and rapid heating (Y) having a higher setting temperature than the constant temperature heating (Z) from the start of the engine (E) to the start of the constant temperature heating (Z).

## Patentansprüche

1. Heizvorrichtung-Steuervorrichtung für einen Luft-Kraftstoff-Verhältnis-Sensor, umfassend: einen Luft-Kraftstoff-Verhältnis-Sensor (80), welcher an einem Abgasrohr (19) eines Motors (E) angebracht ist; eine Heizvorrichtung (88), welche ein Sensorelement (87) des Luft-Kraftstoff-Verhältnis-Sensors (80) heizt; und eine Steuereinheit (100), welche eine Heizungssteuerung für die Heizvorrichtung (88) durchführt, wobei
als Startmodi des Motors (E) zwei Typen aus einem normalen Start (A) zum Starten des Motors (E) gemäß einer Startoperation eines Fahrers und einem Neustart (B) aus einem temporären Stopp durch eine Leerlaufstopp-Steuerung vorhanden sind, und
die Steuereinheit (100) eine Konstanttemperatur-Heizungssteuerung mit einem Verstreichen einer vorbestimmten Zeit (T1, T2, T3, T4) nach dem Start des Motors (E) als einen Trigger startet,
**dadurch gekennzeichnet, dass**
die vorbestimmte Zeit (T1, T2, T3, T4) in einem Fall des Neustarts (B) kürzer eingestellt ist als in einem Fall des normalen Starts (A),
wobei
die Konstanttemperatur-Heizungssteuerung ein Konstanttemperaturheizen (Z) durch eine Rückkopplungssteuerung ist, und
die Steuereinheit (100), in Reihenfolge, ein Vorheizen (X) mit einer geringeren Einstelltemperatur als das Konstanttemperaturheizen (Z) und ein rapides Heizen (Y) mit einer höheren Einstelltemperatur als das Konstanttemperaturheizen (Z) von dem Start des Motors (E) bis zu dem Start des Konstanttemperaturheizens (Z) ausführt.

2. Heizvorrichtung-Steuervorrichtung für einen Luft-Kraftstoff-Verhältnis-Sensor nach Anspruch 1, wobei die vorbestimmte Zeit (T1, T2, T3, T4) kürzer eingestellt ist, wenn eine Kühlwassertemperatur des Motors (E) höher ist.

3. Heizvorrichtung-Steuervorrichtung für einen Luft-Kraftstoff-Verhältnis-Sensor nach Anspruch 1, wobei die vorbestimmte Zeit (T1, T2, T3, T4) kürzer eingestellt ist, wenn ein Drossel-Öffnungsgrad höher ist.

4. Heizvorrichtung-Steuervorrichtung für einen Luft-Kraftstoff-Verhältnis-Sensor nach Anspruch 1, wobei, in dem Fall des Neustarts (B), die Steuereinheit (100) die vorbestimmte Zeit (T1, T2) kurz einstellt, indem eine Zeit, bis das Vorheizen (X) gestartet wird, kürzer als in dem Fall des normalen Starts (A) eingestellt wird.

5. Heizvorrichtung-Steuervorrichtung für einen Luft-Kraftstoff-Verhältnis-Sensor nach Anspruch 1, wobei, in dem Falls des Neustarts (B), die Steuereinheit (100) die vorbestimmte Zeit (T3, T4) kurz einstellt, indem eine Ausführungszeit des Vorheizens (X) kürzer als in dem Fall des normalen Starts (A) eingestellt wird.

6. Heizvorrichtung-Steuerverfahren für einen Luft-Kraftstoff-Verhältnis-Sensor, welcher auf eine Heizvorrichtung-Steuervorrichtung angewandt ist, umfassend: einen Luft-Kraftstoff-Verhältnis-Sensor (80), welcher an einem Abgasrohr (19) eines Motors (E) angebracht ist, eine Heizvorrichtung (88), welche ein Sensorelement (87) des Luft-Kraftstoff-Verhältnis-Sensors (80) heizt, und eine Steuereinheit (100), welche eine Heizungssteuerung für die Heizvorrichtung (88) durchführt, wobei
als Startmodi des Motors (E) zwei Typen aus einem normalen Start (A) zum Starten des Motors (E) gemäß einer Startoperation eines Fahrers und einem Neustart (B) aus einem temporären Stopp durch eine Leerlaufstopp-Steuerung vorhanden sind, und
die Steuereinheit (100) eine Konstanttemperatur-Heizungssteuerung mit einem Verstreichen einer vorbestimmten Zeit (T1, T2, T3, T4) nach dem Start des Motors (E) als einen Trigger startet,
**dadurch gekennzeichnet, dass**
die vorbestimmte Zeit (T1, T2, T3, T4) in einem Fall des Neustarts (B) kürzer ist als in einem Fall des normalen Starts (A),
wobei
die Konstanttemperatur-Heizungssteuerung ein Konstanttemperaturheizen (Z) durch eine Rückkopplungssteuerung ist, und
die Steuereinheit (100), in Reihenfolge, ein Vorheizen (X) mit einer geringeren Einstelltemperatur als das Konstanttemperaturheizen (Z) und ein rapides Heizen (Y) mit einer höheren Einstelltemperatur als das Konstanttemperaturheizen (Z) von dem Start des Motors (E) bis zu dem Start des Konstanttemperaturheizens (Z) ausführt.

## Revendications

1. Dispositif de commande de dispositif de chauffage pour un capteur de rapport air-carburant comportant : un capteur de rapport air-carburant (80) fixé à un tuyau d'échappement (19) d'un moteur (E) ; un dispositif de chauffage (88) qui chauffe un élément capteur (87) du capteur de rapport air-carburant (80) ; et une unité de commande (100) qui réalise une commande de chauffage pour le dispositif de chauffage (88), dans lequel
en tant que modes de démarrage du moteur (E), il y a deux types de démarrage normal (A) pour démarrer le moteur (E) en fonction du fonctionnement de démarrage d'un conducteur et redémarrage (B) à partir d'un arrêt temporaire par commande d'arrêt de ralenti, et
l'unité de commande (100) démarre une commande de chauffage à température constante avec écoulement d'un temps prédéterminé (T1, T2, T3, T4) après le démarrage du moteur (E) en tant que déclencheur, **caractérisé en ce que**
le temps prédéterminé (T1, T2, T3, T4) est réglé de manière à être plus court dans un cas du redémarrage (B) que dans un cas du démarrage normal (A),
dans lequel
la commande de chauffage à température constante est un chauffage à température constante (Z) par commande de rétroaction, et
l'unité de commande (100) exécute, dans l'ordre, un préchauffage (X) présentant une température de réglage plus petite que le chauffage à température constante (Z) et un chauffage rapide (Y) présentant une température de réglage plus élevée que le chauffage à température constante (Z) du démarrage du moteur (E) au démarrage du chauffage à température constante (Z).

2. Dispositif de commande de dispositif de chauffage pour le capteur de rapport air-carburant selon la revendication 1, dans lequel le temps prédéterminé (T1, T2, T3, T4) est réglé pour être plus court à mesure que la température de l'eau de refroidissement du moteur (E) est plus élevée.

3. Dispositif de commande de dispositif de chauffage pour le capteur de rapport air-carburant selon la revendication 1, dans lequel le temps prédéterminé (T1, T2, T3, T4) est réglé pour être plus court à mesure qu'un degré d'ouverture de papillon est plus grand.

4. Dispositif de commande de dispositif de chauffage pour le capteur de rapport air-carburant selon la revendication 1, dans lequel, dans le cas du redémarrage (B), l'unité de commande (100) règle le temps prédéterminé (T1, T2) pour qu'il soit court par réglage d'un temps jusqu'à ce que le préchauffage (X) ait démarré, plus court que dans le cas du démarrage normal (A).

5. Dispositif de commande de dispositif de chauffage pour le capteur de rapport air-carburant selon la revendication 1, dans lequel, dans le cas du redémarrage (B), l'unité de commande (100) règle le temps prédéterminé (T3, T4) pour qu'il soit court par réglage d'un temps d'exécution du préchauffage (X) plus court que dans le cas du démarrage normal (A).

6. Procédé de commande de dispositif de chauffage pour un capteur de rapport air-carburant appliqué à un dispositif de commande de dispositif de chauffage comportant un capteur de rapport air-carburant (80) fixé à un tuyau d'échappement (19) d'un moteur (E), un dispositif de chauffage (88) qui chauffe un élément capteur (87) du capteur de rapport air-carburant (80), et une unité de commande (100) qui réalise une commande de chauffage du dispositif de chauffage (88), dans lequel
en tant que modes de démarrage du moteur (E), il y a deux types de démarrage normal (A) pour démarrer le moteur (E) en fonction du fonctionnement de démarrage d'un conducteur et redémarrage (B) à partir d'un arrêt temporaire par commande d'arrêt de ralenti,
l'unité de commande (100) démarre la commande de chauffage à température constante avec écoulement d'un temps prédéterminé (T1, T2, T3, T4) après le démarrage du moteur (E) en tant que déclencheur,
**caractérisé en ce que**
le temps prédéterminé (T1, T2, T3, T4) est plus court dans un cas du redémarrage (B) que dans un cas du démarrage normal (A),
dans lequel
la commande de chauffage à température constante est un chauffage à température constante (Z) par commande de rétroaction, et
l'unité de commande (100) exécute, dans l'ordre, un préchauffage (X) présentant une température de réglage plus petite que le chauffage à température constante (Z) et un chauffage rapide (Y) présentant une température de réglage plus élevée que le chauffage à température constante (Z) du démarrage du moteur (E) au démarrage du chauffage à température constante (Z).
